# EUROPEAN PATENT APPLICATION

(11) **EP 4 331 782 A1**
(43) Date of publication of application: **06.03.2024**
(21) Application number: 22193032.4
(22) Date of filing: 31.08.2022
(51) Int. Cl.: B25J 17/00, F16D 1/08

(54) **ROBOT COMPRISING AN ELASTIC ELEMENT FOR A SHAFT-HUB CONNECTION**

(71) Applicant: fruitcore robotics GmbH, 78467 Konstanz (DE)
(72) Inventor: RIEGGER, Jens, 78467 Konstanz (DE); FREY, Manuel, 78467 Konstanz (DE)
(74) Representative: Grünecker Patent- und Rechtsanwälte PartG mbB

(57) **Abstract**

The present invention relates to a robot (1) with a shaft-hub connection. The shaft-hub connection comprises a shaft (26), and a hub (33), wherein the shaft (26) and the hub (33) are adapted to rotate around a central axis (100). A connection portion (34) of the shaft (26) is arranged in a sleeve (35) of the hub (33). An elastic element (36) is provided in between the shaft (26) and the sleeve (35) for transmitting torque in between the shaft (26) and sleeve (35).

## Description

The present invention relates to a robot with a shaft-hub connection. The present invention also relates to a method for assembling a robot with a shaft-hub connection and a use of a shaft-hub connection for transmitting a rotation of a drive shaft to a rotary encoder in a robot.

Known robots typically comprise shaft-hub connections that can be divided into frictional, form-fit, and material-fit connections. For example, a feather key connection out of the category of form-fit connections may be used.

It is also known to use elastic elements in robots for sealing purposes. DE 10 2006 022 154 A1 discloses a shaft-hub connection for a multi-axis industrial robot with an elastic sealing ring between the shaft and the hub. The sealing ring is compressed between the shaft and the hub so that the shaft-hub connection is completely sealed against an environment. However, the elastic sealing ring is not suitable for transmitting torque. Instead, the known frictional, form-fit or material-fit connections are used for the shaft-hub connection.

In other fields of technology, such as in large machines and plant constructions, elastic elements are used in the shaft-hub connection for torque transmission. DE 196 133 51 A1 discloses a shaft-hub connection via an elastic element in the form of an O-ring. However, the aforementioned fields of technology require high and especially uniform torques over an extended amount of time. In contrast, a robot, particularly an industrial robot, requires small torques only, but rapid changes in direction and thus dynamic changes in a torque acting on the shaft-hub connection.

It would be preferable to provide a robot with a shaft-hub connection that is capable of transmitting dynamic torque through the shaft-hub connection, while being easy to assemble. According to a first aspect, there is provided a robot with a shaft-hub connection. The shaft-hub connection comprises a shaft, and a hub, wherein the shaft and the hub are adapted to rotate around a central axis. A connection portion of the shaft is arranged in a sleeve of the hub. An elastic element is provided between the shaft and sleeve for transmitting torque between the shaft and sleeve.

The shaft may be slidably insertable in the hub or the hub may be slidably arrangable on the shaft, while the elastic element is arranged therebetween. This may enable for simple and quick assembly and disassembly.

The elasticity of the elastic element may enable to compensate for diameter tolerances of at least 1% or at least 5% and up to 10%. The elasticity of the elastic element may enable to compensate for concentricity tolerances in between the rotation axis of the shaft and the rotation axis of the hub of at least 0.1% or at least 2% of the diameter of the shaft. This may reduce manufacturing complexity as well as required installation space and thus may reduce costs compared to known shaft-hub connections in robots. The above-mentioned features such as easy assembly and limited installation space may be particularly advantageous in the field of robotics as the installation space in robot applications is often small and can therefore be limiting for the overall technical design and efficiency of the robot.

The elastic element may be formed of a material with higher elasticity than both a material of the hub and a material of the shaft.

The robot may further comprise a drive and a rotary encoder. The drive may be connected to the rotary encoder via the shaft-hub connection. The use of an elastic element in shaft-hub connection with or in a rotary encoder enables for an easy-to-assemble and tolerance compensating connection that is free of any play. This enables for accurate measurements, in particular for accurate control feedback.

The hub or shaft may be directly connected to the rotary encoder. Preferably, the hub may form an inner sleeve of the rotary encoder. The shaft may be arranged in the inner sleeve, while the elastic element is arranged therebetween.

The rotary encoder may comprise a code ring. The code ring may form part of the hub or may be provided on a code disk connected to the hub.

The rotational stiffness of the shaft-hub connection may be less than 1 Nm per 1 degree relative rotation. The low torsional stiffness may enable a backlash-free connection and slip-free transmission of torques, which may be particularly advantageous in robotic applications that require high accuracy and the transmission of low torques, e.g. in measuring applications, and component assembly applications, but also in rotary encoders.

The drive train may comprise one or more of a brake, a motor, a gearbox, and one or more joints. Each of these drives may require a corresponding shaft-hub connection. In contrast to shaft-hub connections in applications in which a considerable amount of torque has to be transmitted to drive a large machine, the rotary encoder as a sensor only has to absorb friction of the encoder bearings and should be backlash-free for the sake of high measuring accuracy. The elastic element in the shaft-hub connection enables the implementation of these benefits.

The sleeve of the hub and the connection portion of the shaft may be arranged at a distance from each other.

The torque transmitted by at least one of the shaft and the hub may be substantially completely received by the other. At least 90% or at least 95% of the torque may be transmitted via the elastic element.

The elastic element may be compressed in between the connection portion of the shaft and the sleeve of the hub.

A largest radial extension of the connection portion from the central axis may be smaller than a smallest radial extension of the sleeve.

The robot may be an industrial robot, in particular a six-axis industrial robot, wherein the robot may comprise an end effector. The end effector may be adapted to be moved along a three-dimensional trajectory.

The robot may comprise a four-bar linkage for driving a robot arm, wherein the four-bar linkage may comprise a crank, coupling, and rocker, wherein the crank is driven by a drive and connected to the coupling, wherein the coupling is connected to the rocker, and the rocker is connected to the robot arm, wherein the shaft-hub connection is provided to determine a movement of the shaft connected to the four-bar linkage.

The robot may be a heavy goods vehicle, comprising a drivable base and an end effector, wherein the end effector may be movable relative to the drivable base.

The elastic element may have an annular or cylindrical form.

The elastic element may be in the form of an O-ring-shape.

The elastic element may be made of elastomer, in particular with a Shore hardness in between 30 and 90 Shore HSc, HSd, preferably in between 65 to 75 Shore HSc, HSd, in particular about 70 Shore HSc, HSd.

The hub or the shaft or both may be made of metal, preferably aluminum, in particular anodized aluminum.

At least one of the connection portion of the shaft and the sleeve of the hub may comprise a radial circumferential groove for receiving the elastic element.

The robot may further comprise one or more sealing elements provided in between the shaft and the sleeve. The one or more sealing elements may be arranged in an axial distance from the elastic element.

Preferably, two or more sealing elements may be provided between the shaft and the sleeve. The elastic element may be arranged in between the two sealing elements. In particular, one or more sealing elements may be provided at each axial side of the group of one or more elastic elements. The sealing elements may seal a cavity formed in between the sealing element and the elastic element against the ingress of lubricating fluids, such as oil. Hence, the elastic element may be protected from being contacted by lubricating fluid. Thus, a high coefficient of friction is maintained at the elastic element, allowing an efficient transmission of torque by the elastic element.

The one or more sealing elements may be formed as O-rings.

The one or more sealing elements may be made of an elastomer material with lower elasticity than a material from which the elastic element is formed, and a higher elasticity than both a material of the hub and a material of the shaft.

Alternatively, the one or more sealing elements may be identical in shape and/or identical in material to the elastic element.

Multiple elastic elements may be provided in between the connection portion of the shaft and the sleeve of the hub. The multiple elastic elements may be provided in between the two sealing elements.

At least one of the connection portion of the shaft and the sleeve of the hub may comprise multiple radial circumferential grooves for receiving a corresponding one of the multiple elastic elements. The multiple grooves may be arranged in a distance to each other. The grooves may enable for an advanced axial assembly and a higher contact surface between the elastic element, the shaft, and the hub. Alternatively or additionally, a shaft shoulder may be provided on the shaft for receiving the elastic element.

At least one of the sleeve of the hub and the connection portion of the shaft may have a polygon profile. The polygon profile may enable a shaft-hub connection through form-fitting, thereby allowing the transmission of higher torques.

According to a second aspect, there is provided a method for assembling a robot. The method comprises providing a shaft and a hub, arranging an elastic element on one of the shaft or hub, and inserting the shaft in the hub, such that the elastic element is deformed, wherein torque in between the shaft and hub is transmitted only via the elastic element.

The step of inserting the elastic element may comprise compressing the elastic element by a radial compression rate between 5% and 70%, preferably in between 5% and 40%, most preferably in between 7,5% and 32,5%.

According to a third aspect, there is provided a use of an elastic element in a robot to achieve a shaft-hub connection for transmitting a rotation of a drive shaft to a rotary encoder.

According to a fourth aspect, there may be provided a rotary encoder comprising a shaft, a bushing for radially mounting a shaft, wherein the bushing comprises a protruding portion, wherein the protruding portion extends from an inner surface of the bushing.

The protruding portion may cover between 5% and 30%, preferably 10% to 20%, of the inner surface of the bushing.

The bushing and the protruding portion may be integrally formed.

The rotary encoder may further comprise a hub, wherein the hub may be provided in between the shaft and the bushing. The hub may be adapted to receive torque from the shaft or to transmit torque to the shaft.

The protruding portion may be adapted to be worn away during the operation of the encoder so that a direct connection between the hub and the bushing may be achieved.
Figure 1 shows a schematic perspective view of a robot according to an embodiment of the present invention;
Figure 2 shows a schematic lateral view through a shaft, which may be used in an embodiment of the robot according to Figure 1.
Figure 3 shows a schematic lateral view through a rotary encoder, which may be used in an embodiment of the robot according to Figure 1.
Figure 4 shows an enlarged schematic lateral view of a shaft-hub connection in the rotary encoder according to Figure 3.
Figure 5 shows a schematic lateral view of a shaft hub-connection of a rotary encoder, which may be used in a further embodiment of the robot according to Figure 1.
Figure 6 shows a schematic central view through a shaft hub connection, which may be used in an embodiment of the robot according to Figure 1.
Figure 7 shows a schematic central view through a shaft hub connection, which may be used in a further embodiment of the robot according to Figure 1.
Figure 8 shows a schematic central view through a shaft hub connection, which may be used in a further of the robot according to Figure 1.
Figure 9 shows a schematic central view through a shaft hub connection, which may be used in a further embodiment of the robot according to Figure 1.

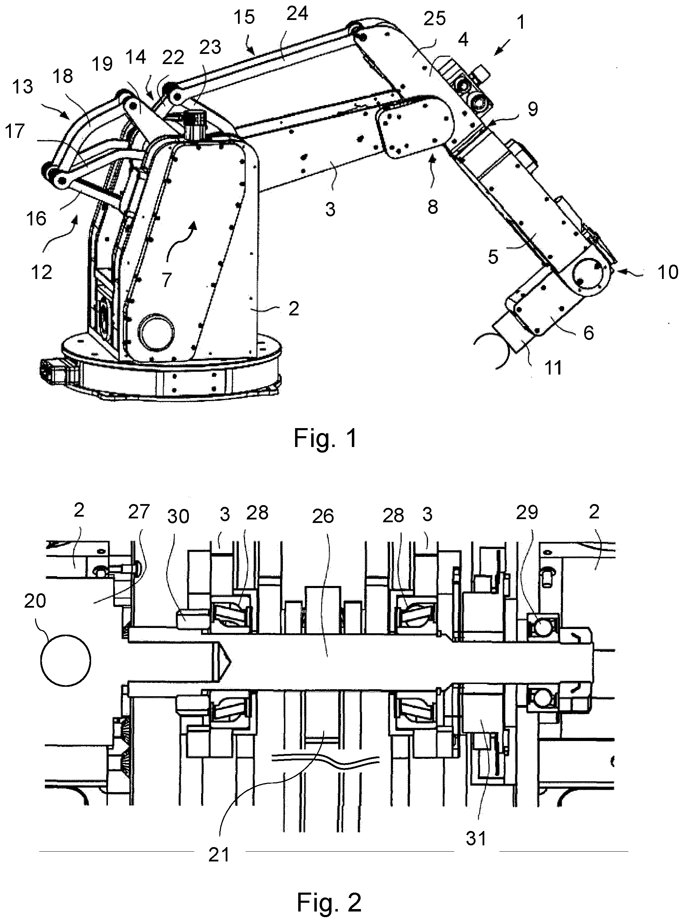

In Figure 1, an embodiment of a robot according to the invention is shown in a perspective view. The robot 1 has a base 2, and several robot arms arranged in series according to serial kinematics, namely a pivot arm 3, an upper support arm 4, a lower support arm 5, and an articulated arm 6.

The robot 1 shown is a six-axis robot. The vertical axis for the rotation of the base 2 represents a first axis of robot 1. A first joint 7 hidden in the base 2 is provided between the base 2 and the pivot arm 3, which defines a second axis of robot 1. A second joint 8 is provided between the pivot arm 3 and the upper support arm 4, defining a third axis of robot 1. A third joint 9 is provided between the upper support arm 4 and the lower support arm 5, defining a fourth axis of the robot 1. The axis of rotation of the third joint 9 is in the direction of extension of the support arm 4, and 5, so that the support arm 4, 5 is rotatable in themselves. A fourth joint 10 is provided between the lower support arm 5 and the articulated arm 6, which defines a fifth axis of robot 1. An end effector 11 in the form of a gripper (not shown) or another working element can be rotated relative to the articulated arm 6 about a sixth axis of the robot 1.

The first and second joints 7, 8 allow the pivot arm 3 and support arm 4, 5 to pivot about the respective, substantially horizontal second and third axes of the robot 1. The drive motors of the third and/or fourth joints 9, 10 are provided directly or via a gearbox at the joints, as in a purely serial kinematic system. The gearbox may be a drive belt.

The drive movements for the first joint 7 and the second joint 8 are transmitted via four-bar linkages 12, 13, 14, and 15, constituting at least a part of a drive train, respectively.

In this regard, the first four-bar linkage 12 and the second four-bar linkage 13 are arranged in series to transmit a driving movement to the pivot arm 3 so that it can be pivoted relative to the base 2. The first four coupling chain 11 has a first crank hidden in the base 2, which can be pivoted through a first drive motor, and is articulated to the coupling 15, and accordingly drives the coupling 15 of the first four coupling chain 11. The coupling 16 is articulated to the rocker 17 of the first four-bar linkage 11 and drives it. The rocker 17 also forms the crank of the second four-bar linkage 13, and is articulated to and drives the coupling 18 of the second four-bar linkage 13. The rocker 19 of the second four-bar linkage 12 is rigidly connected to the pivot arm 3 and rotates with it during its pivoting movement. The rocker 19 and the pivot arm 3 may be formed in one piece. In particular, the rocker 19 and the pivot arm 3 form a rocker with respect to the first joint 7. The crank of the first four-bar linkage 12 may be flanged to a motor or gearbox in base 2 via a drive shaft to be non-displaceable in the axial direction 100. The gearbox may also be a drive belt or the like. The rocker 17 can also be mounted axially immovable in the base 2. Finally, the mounting of the rocker 19 in the first joint 7 may also be axially non-displaceable.

The drive movement for pivoting the support arm 4, 5 relative to the pivot arm 3 is transmitted by the third four-bar linkage 14 and the fourth four-bar linkage 15 from a second drive motor 20 (see Figure 2) in the base 2 to the support arm 4, 5. The second drive motor 20 pivots a crank 21 of the third four-bar linkage 14, which is arranged inside the base 2 and therefore not visible in 1. The crank 21 is hinged to and drives the coupling 22 of the third four-bar linkage 14. The coupling 22 is hinged to the rocker 23 of the third four-bar linkage 14 and drives it. The rocker 23 is also the crank of the fourth four coupling chain 15, which is articulated to and drives the coupling 24 of the fourth four coupling chain 15. The rocker 25 and the upper support arm 4 are rigidly connected in the form of a rocker with respect to the second coupling 7. The rocker 25 of the fourth four-bar coupling chain 15 is in particular formed in one piece with the upper support arm 5. The crank 21 of the third four-bar linkage 14 can be flanged to a motor or gearbox in the base 2 via a drive shaft 26 (see Figure 2) so as to be non-displaceable in the axial direction. The gearbox may also be a drive belt or similar. The rocker 23 can be mounted axially immovable in the pivot arm 3. Finally, the bearing of the rocker 25 in the second joint 8 can also be axially non-displaceable.

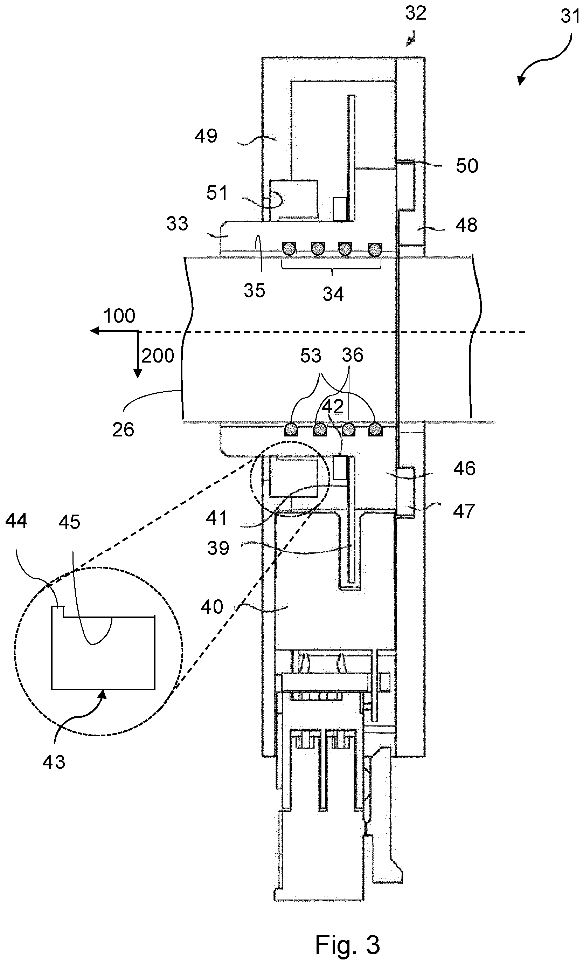

A design of this bearing is shown in Figure 3. According to an embodiment of the invention, a drive shaft 26 is provided on which the crank 21 is fixedly mounted, so that a rotation of the shaft 26 leads to a pivoting of the crank 21 and thus to a pivoting of the support arm 4, 5 about the robot axis in the form of the joint 8 relative to the pivot arm 3. The crank 21 is fastened to the shaft 26 in particular by means of a clamping fit. It is not necessary to press the crank 21 onto the shaft 26. The clamping force can be adjusted by tightening a screw. In particular, the crank 21 is slotted in the fastening area in the radial direction 200 and is tightened in the circumferential direction on the shaft 26. The shaft 26 is connected to a planetary gear 27, which is driven directly or via a drive belt by the second drive motor 20, for example, a stepper motor, and thus rotates the shaft 26. In particular, the shaft 26 is directly attached to the output shaft of the planetary gear 27. The pivot arm 3 is mounted on the shaft 26 via at least one pivot bearing, in the present embodiment via two pivot bearings 28. In the present embodiment, the pivot arm 3 comprises two parallel plates which are each rotated together and are connected to each other in this respect. The plates are each mounted at an axial distance from each other on the shaft 26 via the two pivot bearings 28. The pivot bearings 28 are designed in particular as angular contact ball bearings, but in other embodiments they can also be designed as other rolling bearings or as plain bearings. The shaft 26 is mounted in the base 2 via a pivot bearing 29. A preload mechanism is provided on the main shaft, here in the form of a nut 30, with which the bearing preload can be adjusted in the axial direction 100 of the pivot bearings 28. The shaft 26 has a plurality of steps to make the various elements mountable in a simple manner, so that all the components can be slid onto the shaft 26 in sequence, and the shaft 26 can be mounted in the base 2.

Furthermore, a rotary encoder 31 is provided on the base 2, with which the relative rotation of the pivot arm 3 with respect to the base 2 can be detected and fed back, in particular for control purposes.

The rotary encoder 31 according to an embodiment of the invention is shown in Figure 3 comprises a housing 32 in which a shaft-hub connection is provided. The hub 33 is pressed by a clamping force in radial direction 200 against the shaft 26 so that torque transmitted by at least one of the shaft 26 and the hub 33 is substantially completely received by the other. The shaft 26 and the hub 33 are rotatable arranged about an axial, i.e., central, axis 100. The hub 33 and the shaft 26 extend in the axial direction 100. A connection portion 34 of the shaft 26 is arranged in a sleeve 35 of the hub 33.

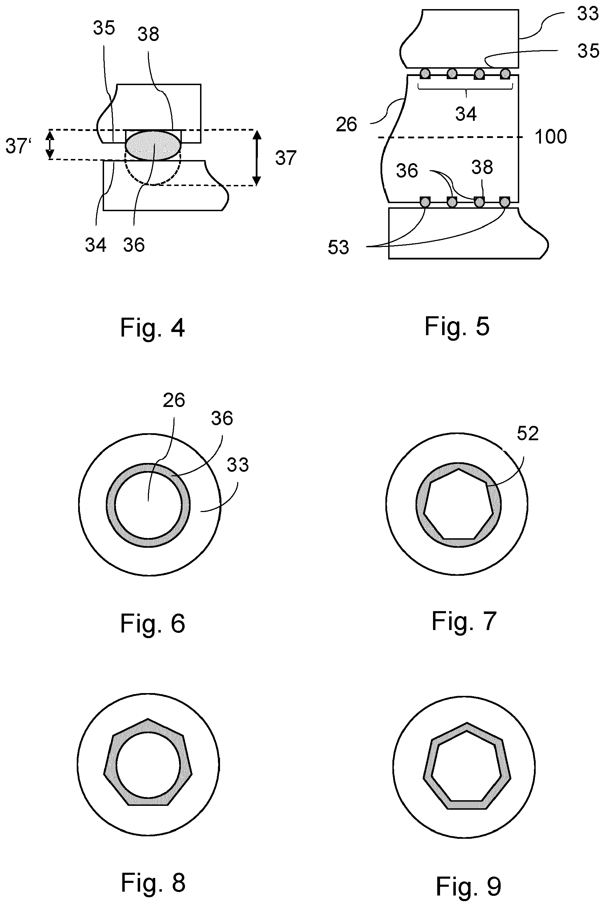

The clamping force acting in radial direction 200 for clamping the shaft 26 on the hub 33 is provided or defined by elastic elements 36, which are directly arranged and radially compressed in between the connection portion 34 of the shaft 26 and the sleeve 35 of the hub 33. Referring to Figure 4, the radial compression rate of the elastic element indicates the ratio of the original radial diameter 37 to the reduced radial diameter 37'. Preferably, the radial compression rate is in between 5% and 70%, preferably in between 5% and 40%, most preferably in between 7,5% and 32,5%.

Referring back to Fig. 3, the one or more elastic elements 36 are provided in an axial distance to each other and are each configured as an O-ring made of an elastomer material with higher elasticity than both a material of the hub 33 and a material of the shaft 26. Sealing elements 53 are provided in between the shaft 26 and the sleeve 35. The sealing elements 53 are provided at both axial sides of and in an axial distance to the elastic elements 36. The sealing elements 53 protect against the ingress of oil or other contaminations, allowing for more efficient transmission of torque via the elastic elements 36. The elastomer has a Shore hardness of in between 30 and 90 Shore HSc, HSd, preferably in between 65 to 75 Shore HSc, HSd, in particular about 70 Shore HSc, HSd. The hub 33 or the shaft 26 or both are made of metal, preferably aluminum, in particular anodized aluminum.

In the present embodiment, the sleeve 25 of the hub 33 comprises radial circumferential grooves 38 for receiving a respective elastic element 36. The multiple grooves 38 are arranged in a distance to each other.

In another embodiment, as shown in Figure 5, the connection portion 34 of the shaft 26 comprises radial circumferential grooves 38 for receiving a respective elastic element 36.

A code disk 39 is attached to hub 33 and protrudes from hub 33 in radial direction 200. The rotation of code disk 39 can be detected by a reading head 40, for example, by means of a code ring provided on the code disk.

Code disk 39 is pressed by a clamping force in axial direction 100 against an abutment 41 which is provided by hub 33. Abutment 41 is in particular a flat surface with a normal in axial direction 100. Abutment 41 extends in particular uniformly around the entire circumference of hub 33.

In the present embodiment, abutment 41 is configured as a flat surface in other embodiments, however, it is also possible for projections, such as pins or other shaped elements, to be provided which enable the code disk 39 to be positioned precisely in the radial direction 200.

The clamping force acting in axial direction 100 for clamping code disk 39 on abutment 41 is provided or defined by a fastening element 42, for example, a resilient element which is arranged directly on code disk 39 . Resilient element is configured as an O-ring made of an elastomer material. A spacer sleeve (not shown) may be provided in axial direction 100 above the resilient element. The spacer sleeve can have different lengths in the axial direction 100, but can also be omitted entirely in some embodiments.

A first bearing 43 is arranged in axial direction 100 above fastening element 42 and is part of the bearing of the hub 33 in housing 32. First bearing 43 is able to transmit the clamping force in axial direction 100 onto housing 32.

In the present embodiment, the first bearing 43 is a bushing for radially mounting the hub 33. The bushing is integrally formed with a protruding portion 44 that extends from an inner surface 45 of the bushing towards the shaft 26. The protruding portion 44 is adapted to be worn away during the operation of the rotary encoder 31 so that a direct connection between the hub 33 and the bushing is achieved. Therefore, the protruding portion 44 covers between 5% and 30%, preferably 10% to 20%, of the inner surface of the bushing. The protruding portion enables to reduce the amount of separated material during the initial run-in process of the bushing. Accordingly, wasted material can be saved and contamination of the reading head 40 can be reduced for a proper function of the rotary encoder 31.

In one embodiment, the protruding portion 44 can be omitted and the inner surface 45 of the bushing is in direct contact with the hub 33.In the present embodiment, abutment 41 is provided by a flange 46 at the end of hub 33. The hub 33 can then be produced in just one turning process, without the need for a turning process on the end side of flange 46. The inner bore of hub 33, which is configured as a hollow hub 33, can also be bored in a turning process.

Flange 46 is also used to support hub 33 relative to housing 32 by way of a second bearing 47 in the form of an axial bearing. Second bearing 48 is configured in particular in the form of a thrust washer.

Housing 32 comprises a housing lower part 48 and a housing upper part 49, where housing parts 48, 49 are each provided with an opening so that a connection to an external component can be established from both sides of hub 33. However, only one opening in housing lower part 48 or in housing upper part 49 can also be provided.

A bearing seat in the form of an annular groove 50 for receiving second bearing 47 is advantageously provided in the housing lower part.

Otherwise, housing lower part 48 is configured to be substantially flat. Housing upper part 49, on the other hand, is pot-shaped so that the components of rotary encoder 31 contained therein, in particular hub 33, code disk 39, and reading head 40 are protected from external influences, in particular dust or dirt and mechanical damage.

Provided in housing upper part 39 is a bearing seat 51 in which first bearing 43 is received.

In one embodiment of rotary encoder 31 according to the invention, housing lower part 48 can be omitted and rotary encoder 31 can be screwed directly onto an attachment surface on which in particular a surface serving as a thrust ring or a bearing seat for second bearing 47 is provided.

Housing lower part 48 and housing upper part 49 are connected to one another by screwing, clamping, adhesive bonding or by clip elements, so that closed housing 32 is created. Seals are provided between housing 32 and hub 33 and between housing parts 48, 49 and in other potential gaps in the housing, so that housing 32 is protected against liquids and dust.

In contrast to shaft-hub connections in application in which a considerable amount of torque has to be transmitted to drive a machine, the rotary encoder 31 as a sensor only has to absorb friction of the bearings 43, 47, and should be absolutely backlash-free for the sake of high measuring accuracy. To meet these requirements, the shaft-hub connection is designed to have a low torsional stiffness of less than 1 Nm per 1 degree of relative rotation.

Figure 6 to 9 show different profiles in a schematic central view of a shaft hub-connection, which may be used in the robot 1 according to Figure 1 and/or the rotary encoder 31 according to Figure 3.

As shown in Figure 6, both of the sleeve 35 of the hub and the connection portion 34 of the shaft 26 have a circular profile.

As shown in Figure 7, the sleeve 35 of the hub 33 has a polygon profile 52, particularly a heptagon profile, and the connection portion 34 of the shaft 26 has a circular profile.

As shown in Figure 8, the sleeve 35 of the hub 33 has a circular profile and the connection portion 34 of the shaft 26 has a polygon, particularly a heptagon, profile.

As shown in Figure 9, both of the sleeve 35 of the hub 33 and the connection portion 34 of the shaft 26 have a polygon, in particular a heptagon, profile.

The polygon profile may enable a shaft-hub connection through form-fitting, thereby allowing the transmission of higher torques. This is in particular advantageous in applications within robot 1 where higher torques need to be transmitted, for example, for the connection of the pivot arm 3 to the shaft 26.

The method for assembling a robot 1 can be explained by way of example using Figure 3. First, the shaft 26 and the hub 33 are provided. Second, the elastic element 36 is arranged on the shaft 26 or hub 33. Third, the shaft 26 is inserted in the hub 33, such that the elastic element 36 is deformed so that torque in between the shaft 26 and hub 33 is transmitted only via the elastic element 36. In an embodiment, the elastic element 36 is compressed by a radial compression rate of in between 5% and 70%, preferably in between 5% and 40%, most preferably in between 7,5% and 32,5%.

## Claims

1. A robot (1) comprising
a shaft-hub connection comprising
a shaft (26), and
a hub (33),
wherein the shaft (26) and the hub (33) are adapted to rotate around a central axis (100), wherein a connection portion (34) of the shaft (26) is arranged in a sleeve (35) of the hub (33), wherein an elastic element (36) is provided in between the shaft (26) and the sleeve (35) for transmitting torque in between the shaft (26) and sleeve (35).

2. The robot (1) according to claim 1, further comprising
a drive (20), and
a rotary encoder (31),
wherein the drive is connected to the rotary encoder (31) via the shaft-hub connection.

3. The robot (1) according to claim 2, wherein the hub (33) or shaft (26) is directly connected to the rotary encoder (31).

4. The robot according to any one of the preceding claims, wherein the rotational stiffness of the shaft-hub connection is less than 1 Nm per 1 degrees relative rotation.

5. The robot (1) according to any one of the preceding claims, wherein the elastic element (36) is compressed in between the connection portion (34) of the shaft (26) and the sleeve (35) of the hub (33).

6. The robot according to any one of the preceding claims, wherein a largest radial extension of the connection portion (34) from the central axis is smaller than a smallest radial extension of the sleeve (35).

7. The robot (1) according to any one of the preceding claims, wherein the robot (1) is an industrial robot, in particular a six-axis industrial robot, wherein the robot (1) comprises an end effector (11), wherein the end effector (11) is adapted to be moved along a three-dimensional trajectory.

8. The robot (1) according to any one the preceding claims, wherein the elastic element (36) has an annular or cylindrical form.

9. The robot (1) according to any one the preceding claims, wherein the elastic element (36) is made of elastomer, in particular with a Shore hardness in between 30 and 90 Shore HSc, HSd, preferably in between 65 to 75 Shore HSc, HSd, in particular about 70 Shore HSc, HSd.

10. The robot (1) according to any one the previous claims, wherein at least one of the connection portion (34) of the shaft (26) and the sleeve (35) of the hub (33) comprises a radial circumferential groove (38) for receiving the elastic element (36).

11. The robot (1) according to any one the preceding claims, further comprising one or more sealing elements (53) provided in between the shaft (26) and the sleeve (35), wherein the one or more sealing elements (53) are arranged in an axial distance from the elastic element (36).

12. The robot (1) according to any one the previous claims, wherein at least one of the sleeve (35) of the hub (33) and the connection portion (34) of the shaft (26) has a polygon profile (52).

13. Method for assembling a robot (1),
providing a shaft (26),
providing a hub (33),
arranging an elastic element (36) on one of the shaft (26) or hub (33),
inserting the shaft (26) in the hub (33), such that the elastic element (36) is deformed,
wherein torque in between the shaft (26) and hub (33) is transmitted only via the elastic element (36).

14. The method according to claim 13, wherein the step of inserting the elastic element (36), comprises compressing the elastic element (36) by a radial compression rate of in between 5% and 70%, preferably in between 5% and 40%, most preferably in between 7,5% and 32,5%.

15. Use of an elastic element (36) in a robot (1) to achieve a shaft-hub connection for transmitting a rotation of a drive shaft (26) to a rotary encoder (31).
